# EUROPEAN PATENT APPLICATION

(11) **EP 2 818 342 A1**
(43) Date of publication of application: **31.12.2014**
(21) Application number: 12869280.3
(22) Date of filing: 21.02.2012
(51) Int. Cl.: B60G 7/00, B60G 3/20, B60G 11/16

(54) **VEHICLE SUSPENSION ARM**

(71) Applicant: Yorozu Corporation, Yokohama-shi, Kanagawa 222-8560 (JP)
(72) Inventor: NAKASATO, Hidetoshi, Yokohama-shi Kanagawa 222-8560 (JP); BABA, Yoichi, Yokohama-shi Kanagawa 222-8560 (JP)
(74) Representative: Weber, Jean-François
(86) International application number: PCT/JP2012/054147
(87) International publication number: WO 2013/124972

(57) **Abstract**

[Problem] To provide a vehicle suspension arm which can be produced at a low cost and in which the shape of each constituent component can be simplified and the size and weight of the constituent components can be logically reduced.

[Solution] When forming the lower arm (2) of a vehicle suspension, an arm main body (10) is configured from a pair of opposing side plates (11), a bottom plate (12) integrally formed with both side plates (11) so as to connect same, and a spring receiving seat member (13) attached to the side plates (11), wherein both side plates (11) are disposed so as to extend within the bottom region (R) of the spring receiving seat member (13).

## Description

### TECHNICAL FIELD

The present invention relates to a vehicle suspension arm whose components having simple shapes and whose entire structure reasonably reduced in size.

### BACKGROUND ART

There are various forms of vehicle suspension. For example, there is a vehicle suspension in which one end of an upper arm is connected to an upper part of a knuckle which is disposed at an axle side, one end of a lower arm is connected to a lower part of the knuckle, the other ends of these arms are connected to the vehicle body side, and a suspension coil spring and a damper are provided between the lower arm and the vehicle body.

The lower arm has a long arm body, a connecting part provided at an end of the arm body, and a spring receiving seat member provided at substantially the center of the arm body. The suspension coil spring is provided on the spring receiving seat member and a lower end of the damper is attached near the knuckle of the arm body.

In the lower arm, since the spring receiving seat member is a relatively large component, a damper insertion hole into which the damper is inserted need to be formed as a large opening. Thus, a lump formation of the entire arm body by pressing is difficult and is likely to cause material loss.

In press-forming of an arm body of a traditional lower arm disclosed in Patent Literature 1 mentioned below, for example, therefore, a pair of arm half bodies opposed to each other is first connected and integrated by an intermediate member serving as a top wall, and are then subjected to press-forming. Subsequently, the arm half bodies are bent with respect to a center of the top wall, and arm half bodies are formed into a pressed product having a U-shaped cross section. Holes for a spring receiving seat member and a damper insertion are then formed in the pressed product. In the meantime, the spring receiving seat member having a bottom and cylindrical shape is formed by pressing as a separate component. Finally, the spring receiving seat member is inserted into the holes for the spring receiving seat member formed in the pressed product, and the pressed product and the spring receiving seat member are joined by welding.

In the case of forming a lower arm as seen above, combining the components after forming the components separately can facilitate formation of each component and material loss can be reduced.

### Citation List

### Patent Literatures

Patent Literature 1: JP 2002-316228 A

### SUMMARY OF INVENTION

### Technical Problem

The lower arm, however, has a structure in which the spring receiving seat member surrounds and sutains the lower end part of the suspension coil spring to support the spring suspension coil, so the spring receiving seat member needs to have a certain depth or height, which makes the component larger in size, and as a result, also makes the arm half bodies to which the large spring receiving seat member is attached larger in size. Furthermore, when the spring receiving seat member is applied to various springs, there is also a disadvantage in that different spring receiving seat members are required for each springs. In addition, since the spring receiving seat member is inserted in the large holes formed in the arm half bodies for attachment, the entire lower arm is also increased in sized.

Furthermore, since a double structure is caused by the cylindrical portion supporting the spring receiving seat member formed in the arm half bodies and the cylindrical portion of the spring receiving seat member, the total weight of the entire lower arm is increased, and there is also a disadvantage in cost.

The present invention has been made in order to solve the aforementioned problems in the related art, and an object thereof is to provide a vehicle suspension arm including components having simple shapes, having an entire structure being reasonably reduced in size and weight, and being achieved at low cost.

### Solution to Problem

The present invention achieving the aforementioned object is a vehicle suspension arm including: a long arm body; connecting portions provided at respective ends of the arm body, and connected to an axle side or a vehicle body side; and a spring receiving seat member adapted to support a suspension coil spring provided between the vehicle body and the vehicle suspension arm, the spring receiving seat member being formed separately from the arm body and attached to the arm body, wherein the arm body includes a pair of side plates opposed to each other and a bottom plate integrally formed to connect the side plates, and the side plates are arranged to extend within a lower surface area of a spring receiving seat of the spring receiving seat member.

### Advantageous Effect of Invention

According to the invention of claim 1, since the arm body includes a pair of side plates opposed to each other and a bottom plate connecting the side plates and the side plates are arranged to extend within a lower surface area of spring receiving seat of the spring receiving seat member, the spring receiving seat member is supported by the side plates, the side plates are not affected by the size of the spring receiving seat member, the side plates are not increased in size with the size of the spring receiving seat member as in the related art, and the suspension arm itself can be reasonably reduced in size. Furthermore, since the spring receiving seat member is supported by the side plates and the suspension coil spring is placed on the spring receiving seat member, the spring receiving seat part does not have such a double structure as in the related art, the shapes of the components can be made simpler, the weight of the entire arm can be reduced, little waste material is caused in press forming, the manufacture cost can be reduced, and there is thus a significant advantage in cost.

According to the invention of claim 2, since the spring receiving seat member is formed of a plate material having a flat structure having a support part supporting the end part of the suspension coil spring, various sizes of suspension coil springs can be supported to some extent, the spring receiving seat member itself can have a simple shape, without being increased in size, and the suspension arm can also be made smaller.

According to the invention of claim 3, since the spring receiving seat member is arranged in notched reces parts formed in the upper faces of the side plates of the arm body, the spring receiving seat member can be firmly and stably attached to the arm body.

According to the invention of claim 4, since the spring receiving seat member is supported by the side plates, the damper insertion hole and the weight reducing holes formed in the side plates or the bottom plate between the side plates can be enlarged or provided in large quantity. Furthermore, since reinforcement beads are formed near the holes, the weight can be reduced while maintaining the stiffness or the strength of the suspension arm.

According to the invention of claim 5, since a reinforcement plate is provided between ends of the side plates of the arm body and connected with the side plates by welding, the stiffness or the strength of the side plates can be further improved.

### BRIEF DESCRIPTION OF DRAWINGS

Fig. 1 is a schematic front view of suspension in which a suspension arm is used according to an embodiment of the present invention.
Fig. 2 is a front view of a lower arm of the suspension.
Fig. 3 is an exploded perspective view of the lower arm of the suspension.
Fig. 4 is a bottom view of the lower arm of the suspension.
Fig. 5 is a cross-sectional view taken along line 5-5 in Fig. 2.
Fig. 6 is a cross-sectional view taken along line 6-6 in Fig. 2.
Fig. 7 is a cross-sectional view taken along line 7-7 in Fig. 2.

### DESCRIPTION OF EMBODIMENTS

An embodiment of the present invention will be described below with reference to the drawings.

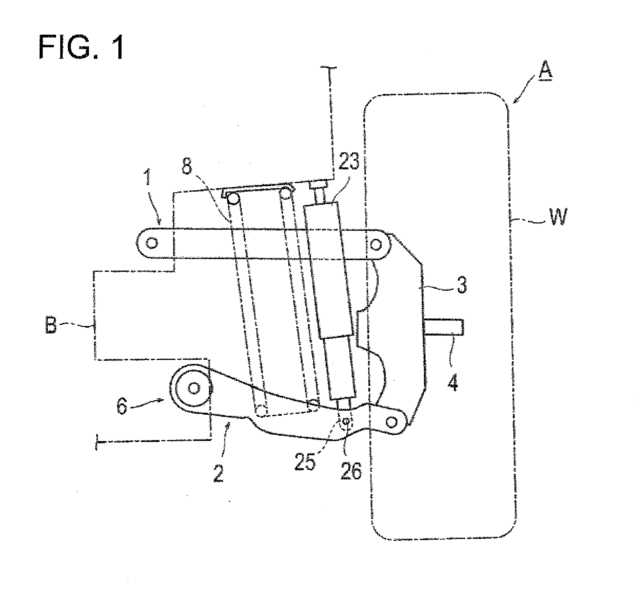

Suspension according to the embodiment includes an upper arm 1 and a lower arm 2 as illustrated in Fig. 1. One end of each of the arms 1 and 2 is connected to a vehicle body B side, and the other end thereof is connected to a knuckle 3 of an axle A side. In the drawing, a reference "W" represents a wheel and a reference "4" represents an axle shaft.

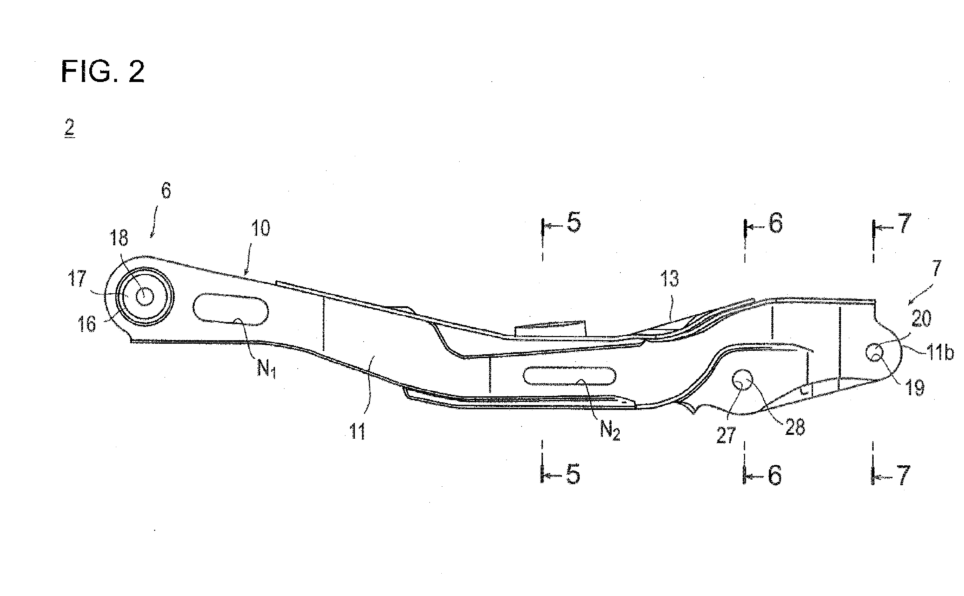

As illustrated in Figs. 1 and 2, the lower arm 2 has a long arm body 10, a spring receiving seat member 13 that is provided at an upper part of the arm body 10 and supports a suspension coil spring 8, and connecting portions 6 and 7 which are provided at respective ends of the arm body 10 and connected to the axle A side or the vehicle body B side.

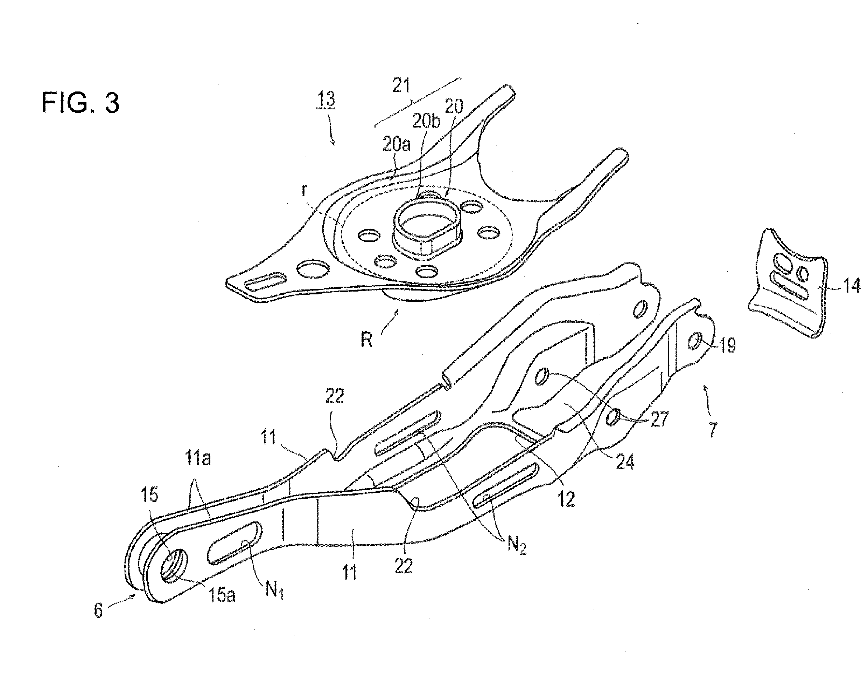

As illustrated in Figs. 2 and 3, the arm body 10 has a U-shaped cross-section and an entire structure generally open at the top, and the arm body 10 includes a pair of side plates 11 opposed to each other and a bottom plate 12 formed integrally to connect the side plates 11.

The spring receiving seat member 13 is provided on the side plates 11, and a reinforcement plate 14 is provided near the connecting part 7 on the side of the axle A, which are connected by welding. The spring receiving seat member 13 and the reinforcement plate 14 are formed by press-forming separately from the side plates 11, and then attached to the side plates 11.

The side plates 11 are formed by pressing a hot-rolled steel sheet and then bending a bottom plate 12 of the pressed steel sheet as a center. As illustrated in Fig. 3, at the connecting part 6 of the formed side plates 11 to be connected to the vehicle body B, end plates 11 a are closely positioned each other. On end plates 11a, holes 15 with relatively large bore whose edge portion 15a is raised by pierce-burring is provided.A color member 16 is connected to the holes 15 by welding as illustrated in Fig. 2. A rubber bush 17 made of an elastic material is press-fitted into the color member 16, a support shaft 18 for the vehicle body B is inserted into the rubber bush 17 and connected to the vehicle body B. The presence of the rubber bush 17 allows vibration transmitted from the axle to the arm body 10 to be damped and the vibration is transmitted to the vehicle body B.

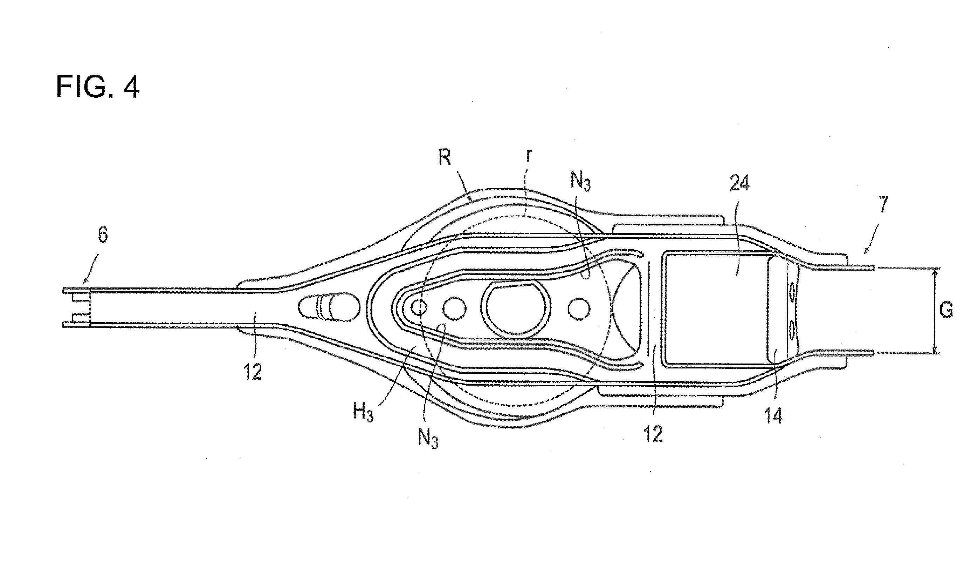

In the meantime, at the connecting part 7 connected with the knuckle 3, end plates 11b have shapes of yoke brackets, and the connecting part 7 is connected with the knuckle 3 by a support shaft 20 inserted into holes 19 provided in the end plates 11b. As illustrated in Figs. 3 and 4, the distance G between the end plates 11b is larger than that between the end plates 11a connected with the vehicle body B. This is because a damper 23 having a relatively large diameter, which will be described later, will be inserted and located(see FIG. 1).

In particular, in the embodiment, as illustrated in Figs. 3 and 4, the side plates 11 are arranged to extend a lower surface area R of the spring receiving seat member 13 and the side plates 11 support the lower surface of the flat spring receiving seat member 13 from vertically below.

The "lower surface area R of the spring receiving seat member 13" mentioned herein is an area occupied by a projection plane formed when the spring receiving seat member 13 with a recess 20, which will be described later, is viewed from below the vehicle body. Contact lines of the side plates 11 in contact with the spring receiving seat member 13 extend within the lower surface area R, and the shapes of the side plates 11 below the contact lines do not go beyond the lower surface area R when the projection plane is formed as viewed from below.

When the side plates 11 extend within such a lower surface area R, the elastic force of the suspension coil spring 8 is reliably supported by the side plates 11, which provides excellent strength.

Thus, if the side plates 11 extend within the lower surface area R of the spring receiving seat member 13 and are prevented from extending beyond the lower surface area R of the spring receiving seat member 13 as illustrated in Fig. 4, the spring receiving seat member 13 functions like a vertical wall arranged perpendicular to the lower surface of the spring receiving seat member 13, a supporting state favorable in strength will be achieved, and the force from the suspension coil spring 8 will be reasonably supported.

For only supporting the force from the suspension coil spring 8, it can also be said that the side plates 11 preferably extend within a spring grounding circle area r shown by a broken line in Figs. 3 and 4, that is, within an area in which the lower end of the suspension coil spring 8 is in contact with the spring receiving seat member 13. In the embodiment, however, since a spring receiving seat member 13 larger than the outer diameter of the suspension coil spring 8 can be used, the side plates 11 are assumed to extend the lower surface area R of the spring receiving seat member 13.

Furthermore, when the side plates 11 extend the lower surface area R of the spring receiving seat member 13, the side plates 11 need not be formed to bulge larger than the outer diameter of the spring receiving seat member 13, and the side plates 11 themselves become compact components.

As illustrated in Figs. 3 and 4, the spring receiving seat member 13 is a component having a flat disc-like shape and including a support part 21 supporting only the lowermost end part of the suspension coil spring 8. The support part 21 is composed of an annular or circular and relatively shallow concave part 20 formed in the bottom face of the flat spring receiving seat member 13, and a side wall 20a of the concave part 20 supports the lowermost end part of the suspension coil spring 8 and also has a function of restricting displacement of the suspension coil spring 8 in the direction perpendicular to the axial direction.

With such a support part 21, the spring receiving seat member 13 has a simple shape, the weight of the entire lower arm can be reduced, and advantage in cost can be provided. Furthermore, a boss 20b may be formed at the center of the spring receiving seat member 13 to restrict displacement in the direction perpendicular to the axial direction of suspension coil springs 8 having different diameters.

The upper end faces of the side plates 11 may be made smooth and the spring receiving seat member 13 may be directly connected the upper end faces by welding. However, as illustrated in Fig. 3, it is preferable to form a cutout 22 having similar shape as the concave part 20 of the spring receiving seat member 13 in the upper end face of each of the side plates 11, fit the concave part 20 of the spring receiving seat member 13 into the cutouts 22, and connect the spring receiving seat member 13 with the side plates 11 by welding. This not only improves the workability in welding but also enhances the strength of connection between the spring receiving seat member 13 and the side plates 11.

As shown in Figs. 3 and 4, the distance between the side plates 11 is relatively smaller at the connecting part 6 and neighborhood, and the distance is significantly larger in a range from the part where the spring receiving seat member 13 is attached to the connecting part 7. In this way,the reason why the cutout22 which spring receiving seat member 13 is attached is largely far from the connecting part 7 is to form damper insertion hole 24 in which damper 23 is inserted (see fig.1) and support spring receiving seat member 13 stably.

The damper 23 is also called a shock absorber, is adapted to damp periodic vibration of the spring, and generally has a cylindrical shape. A base end of the damper 23 is fixed to the side plates 11 by inserting a support shaft 28 into a hole 26 of a connecting member 25 (see Fig. 1) and holes 27 provided in the side plates 11 (see Figs. 2 and 3). An upper end of the damper 23 is connected to the vehicle body B by a common method.

Since forces from the damper 23 and the suspension coil spring 8 are applied to the side plates 11, the side plates 11 have to have stiffness and have to be lightweight. In this regard, since the spring receiving seat member 13 that is separately formed on the pair of side plates 11 is placed in the embodiment, large weight reduction holes N1 to N3 or a large number of holes can be provided in the side plates 11, and reinforcement beads H1 to H3 can also be easily formed near such holes.

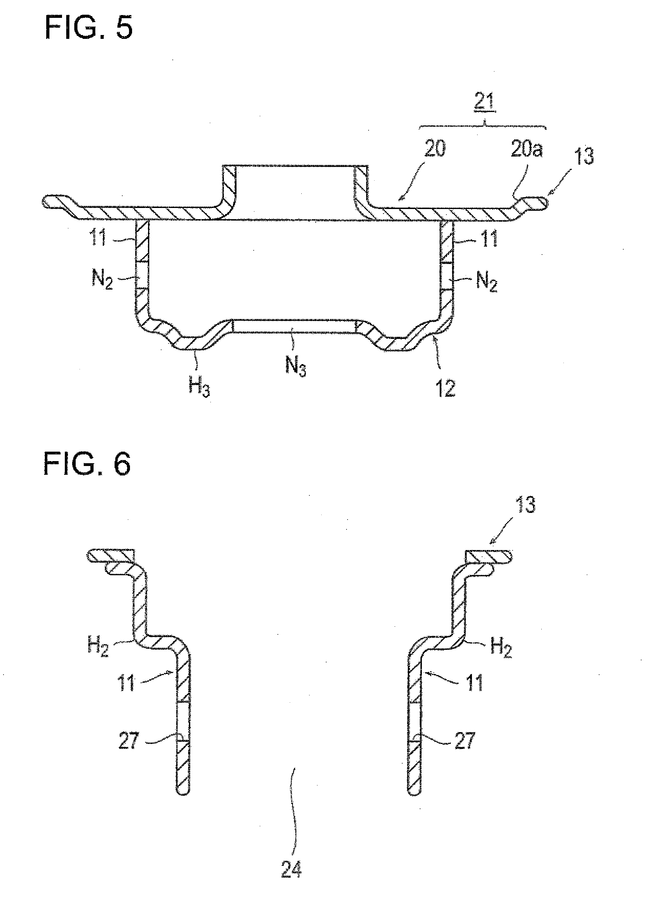

In the embodiment, as illustrated in Fig. 5, weight reduction holes N2 are formed in the side plates 11 and a large weight reduction hole N3 is formed in the bottom plate 12 near the spring receiving seat member 13. In particular, a reinforcement bead H3 is formed around the circumferential edge of the weight reduction hole N3 formed in the bottom plate 12 to prevent degradation of strength due to weight reduction.

As illustrated in Fig. 6, no weight reduction holes are formed near the damper insertion hole 24 but reinforcement beads H2 are formed by bending the side plates 11 to enhance the strength of the side plates 11.

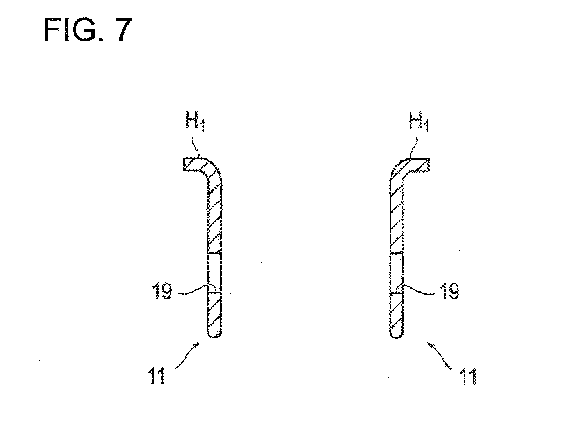

As illustrated in Fig. 7, no weight reduction holes are formed near the connecting part 7 but reinforcement beads H1 are formed by bending the side plates 11 to enhance the strength of the side plates 11.

Furthermore, since the vicinity of the connecting part 7 is close to the large damper insertion hole 24, the stiffness of the side plates 11 is lowered. In the embodiment, a reinforcement plate 14 is therefore provided between bases of the end plates 11b, and connected to the side plates 11 by welding to prevent reduction of the stiffness of the side plates 11.

Next, operation will be described.

First, for manufacture of the lower arm 2, a hot-rolled steel sheet having a predetermined thickness is subjected to press-forming, to form a primary product having a shape in which a pair of side plates 11 is connected with a bottom plate 12 therebetween. In the pair of side plates 11, holes 15 in which a color member 16 is to be inserted, holes 19, cutouts 22 to which a spring receiving seat member 13 is to be attached, weight reduction holes N1 to N3, reinforcement beads H1 to H3, and the like are also formed at the same time.

Subsequently, the side plates 11 of the product are bent so that the cross-sectional shape perpendicular to the axis along the longitudinal direction becomes a U-shape.

Furthermore, in another process, a hot-rolled steel sheet is pressed to form a flat spring receiving seat member 13 having a support part 21.

Separate formation of the pair of side plates 11 and the spring receiving seat member 13 in this manner can cause little material loss and is thus advantageous in cost.

The spring receiving seat member 13 is then set in the cutouts 22 of the side plates 11, the spring receiving seat member 13 and the side plates 11 are connected by welding, and the color member 16 is placed in the holes 15 and subjected to welding. Since the spring receiving seat member 13 need not be press-fitted into the side plates 11 for attachment of the spring receiving seat member 13 as in the related art, the manufacture becomes easier and significantly advantageous in cost.

Although a rubber bush 17 is press-fitted into the color member 16 at the connecting part 6 side for the postforming lower arm 2, a support shaft 18 of the vehicle body B side may be inserted into the rubber bush 17 and a support shaft 20 may be inserted into the holes 19 in the end plates 11b when the lower arm 2 is to be mounted on a vehicle.

The present invention is not limited to the embodiment described above, but can be modified in various ways by those skilled in the art within the technical scope of the invention. For example, although one connecting part 6 is provided with a color member 16 and the other connecting part 7 is a pair of yoke brackets in the embodiment described above, the present invention is not limited thereto, and both of the connecting parts may have color members 16 or may be yoke brackets.

### Industrial Applicability

The present invention can be suitably applied to a lower arm of vehicle suspension.

### Reference Signs List

- 2:: Lower arm
- 6, 7:: Connecting part
- 8:: Suspension coil spring
- 10:: Arm body
- 11:: Side plate
- 12:: Bottom plate
- 13:: Spring receiving seat member
- 14:: Reinforcement plate
- 20:: Concave part
- 20a:: Side wall
- 20b:: Boss
- 21:: Support part
- 22:: Cutout
- 24:: Damper insertion hole
- A:: Axle
- B:: Vehicle body
- H1 to H3:: Reinforcement beads
- N1 to N3:: Weight reduction holes
- R:: Lower surface area of spring receiving seat member
- r:: Spring grounding circle area

## Claims

1. A vehicle suspension arm comprising:
a long arm body;
connecting parts provided at respective ends of the arm body, and connected to an axle or a vehicle body; and
a spring receiving seat member adapted to support a suspension coil spring provided between the vehicle body and the vehicle suspension arm, the spring receiving seat member being formed separately from the arm body and attached to the arm body,
wherein
the arm body includes a pair of side plates opposed to each other and a bottom plate integrally formed to connect the side plates, and the side plates are arranged to extend within a lower surface area of a spring receiving seat of the spring receiving seat member.

2. The vehicle suspension arm according to claim 1, wherein the spring receiving seat member is composed of a flat plate material having a support part supporting an end of the suspension coil spring.

3. The vehicle suspension arm according to claim 1 or 2, wherein the spring receiving seat member is arranged in cutouts formed in upper faces of the side plates of the arm body.

4. The vehicle suspension arm according to any one of claims 1 to 3, wherein the arm body has a damper insertion hole and a weight reduction hole in the bottom plate between the side plates and has a reinforcement bead formed near the holes.

5. The vehicle suspension arm according to any one of claims 1 to 4, wherein the arm body is provided with a reinforcement plate between ends of the side plates constituting the connecting part, the reinforcement plate being connected to the side plates by welding.

## Amended claims

### Amended claims under Art. 19.1 PCT

1. (Amended) A vehicle suspension arm comprising:
a long arm body;
connecting parts provided at respective ends of the arm body, and connected to an axle or a vehicle body; and
a spring receiving seat member adapted to support a suspension coil spring provided between the vehicle body and the vehicle suspension arm, the spring receiving seat member being formed separately from the arm body and attached to the arm body,
wherein
the arm body includes a pair of side plates opposed to each other and a bottom plate integrally formed to connect the side plates, and the side plates are arranged to extend within a lower surface area of a spring receiving seat of the spring receiving seat member, and
the spring receiving seat member is directly connected to the arm body by welding.

2. The vehicle suspension arm according to claim 1, wherein the spring receiving seat member is composed of a flat plate material having a support part supporting an end of the suspension coil spring.

3. The vehicle suspension arm according to claim 1 or 2, wherein the spring receiving seat member is arranged in cutouts formed in upper faces of the side plates of the arm body.

4. The vehicle suspension arm according to any one of claims 1 to 3, wherein the arm body has a damper insertion hole and a weight reduction hole in the bottom plate between the side plates and has a reinforcement bead formed near the holes.

5. The vehicle suspension arm according to any one of claims 1 to 4, wherein the arm body is provided with a reinforcement plate between ends of the side plates constituting the connecting part, the reinforcement plate being connected to the side plates by welding.

Statement under Art. 19.1 PCT
Document 1 (JP 2005-231512) teaches that a sheet member is not attached to a main arm member but attached to a top surface of a bracket member. In claim 1 of the present application, the feature that the spring receiving seat member is directly connected to the arm body by welding is therefore clarified.

As a result, since the arm body extends within a lower surface area of the spring receiving seat member, the vehicle suspension member claimed in claim 1 of the present application can achieve advantageous effects that the shape of the arm body does not increase in size with the shape of the spring receiving seat member, the vehicle suspension arm can be reduced in size and in weight, and an inexpensive product can be produced.

Such a feature is neither taught by Document 1, nor by any of Document 2 (WO2005/002890) Document 3 (JP2002-315228), and Document 4 (JP2009-029229), which are different from the present invention.
